# EUROPÄISCHE PATENTSCHRIFT

(11) **EP 2 428 785 B1**
(45) Veröffentlichungstag und Bekanntmachung des Hinweises auf die Patenterteilung: **25.05.2016**
(21) Anmeldenummer: 11178614.1
(22) Anmeldetag: 24.08.2011
(51) Int. Cl.: H01H 35/38, G01L 19/00

(54) **Druckschalter**
Pressure switch
Interrupteur à pression

(30) Priorität: 03.09.2010 DE 102010040213
(43) Veröffentlichungstag der Anmeldung: 14.03.2012
(73) Patentinhaber: Aktiebolaget SKF, 415 50 Göteborg (SE)
(72) Erfinder: Dr. Kampf, Marcus, 12159 Berlin (DE); Kreutzkämper, Jürgen, 10405 Berlin (DE); Schmidt, Fabian, 14979 Großbeeren (DE); Schönherr, Dieter, 14979 Kleinbeeren (DE)
(74) Vertreter: Schonecke, Mitja

(56) Entgegenhaltungen:
- DE-A1- 1 957 687
- DE-A1- 10 155 839
- JP-A- 8 304 197
- JP-A- 2002 197 952

## Beschreibung

Die Erfindung betrifft ein Druckmesselement, umfassend ein Gehäuse, das eine Kavität zur Aufnahme eines Fluids aufweist, dessen Druck zu messen ist, wobei das Druckmesselement weiterhin ein druckaufnehmendes Element zur Messung des Drucks aufweist, das mit der Kavität in fluidischer Verbindung steht, wobei sich die Kavität von einem Einlass bis zu einem Auslass erstreckt und einen Fließweg für das Fluid bildet, wobei das druckaufnehmende Element zwischen dem Einlass und dem Auslass im Fließweg angeordnet ist.

Druckmesselemente bzw. Druckschalter dieser Art sind im Stand der Technik bekannt, wozu beispielhaft auf die DE 19 57 687 A, auf die JP 08-304197 A, auf die JP 2002 197952 A und auf die DE 101 55 839 A1 hingewiesen wird. Sie werden beispielsweise in Schmiersystemen eingesetzt, die Maschinenkomponenten mit Schmierfett versorgen. Hierbei ist ein bestimmter Druck im Schmierfett aufrecht zu erhalten; sinkt der Druck ab, muss weiteres Schmierfett von einer Fettpumpe nachgepumpt werden. Demgemäß überwacht ein gattungsgemäßes Druckmesselement den aktuell sich in einem definierten Bereich der Anlage befindlichen Druck des Schmiermittels.

Bekannte Druckmesselemente weisen im Anschluss eine Art Sackgasse (Totraum) vor dem Druckraum auf, in dem das Fett nicht zirkuliert und folglich nicht ausgetauscht wird. Das sich dort befindliche Fett kann somit altern, was durch wechselnden Druck noch begünstigt wird. Somit wird das Fett über die Zeit separiert (Grundöl "blutet" aus), so dass es verhärtet.

Dieser Totraum ("Sackgasse") ist konstruktionsbedingt und wird noch dadurch vergrößert, dass T-Stücke im Bereich anderer Anschlussarmaturen eingesetzt werden.

Der genannte Effekt des Aushärtens des Fettes ist insbesondere stark abhängig vom konkreten Ausblutverhalten des Fetts sowie von seinen Fließeigenschaften und seinem Feststoffanteil. Die Auswahl des Fetts kann allerdings mitunter nur begrenzt beeinflusst werden.

Bei vorbekannten Druckmesselementen der eingangs genannten Art kommt es daher vor, dass ein sich gebildeter Fettpfropfen so verhärtet, dass das Druckmesselement nicht mehr arbeitet, d. h. dass er bei entsprechenden Druckverhältnissen nicht mehr schaltet.

Der Erfindung liegt die Aufgabe zugrunde, ein Druckmesselement der gattungsgemäßen Art so auszubilden, dass der genannte nachteilige Effekt verhindert werden kann. Eine Beeinträchtigung der Funktion des Druckmesselements durch sich verhärtendes Fluid soll demgemäß zuverlässig verhindert werden.

Die Lösung dieser Aufgabe durch die Erfindung ist dadurch gekennzeichnet, dass das druckaufnehmende Element eine zylindrische Form mit konstantem Durchmesser aufweist, wobei es in einer Bohrung im Gehäuse angeordnet ist, die einen konstanten Bohrungsdurchmesser aufweist, und wobei sich das druckaufnehmende Element mit einem seiner Enden in den Fließweg hinein erstreckt und mit seiner restlichen Erstreckung im Gehäuse angeordnet ist, wobei das druckaufnehmende Element gegen den Druck eines Federelements auslenkbar angeordnet ist und wobei aus besagter Auslenkung des druckaufnehmenden Elements gegen den Druck des Federelements der Druck im Fließweg bestimmt wird.

Der Fließweg ist bevorzugt zumindest abschnittsweise zylindrisch ausgebildet.

Das druckaufnehmende Element ist dabei bevorzugt im Bereich des zylindrischen Abschnitts angeordnet.

Der Einlass und der Auslass können jeweils einen Gewindeabschnitt aufweisen, wobei das Gewinde in das Gehäuse geschnitten ist. Der Durchmesser des Gewindeabschnitts ist dabei bevorzugt größer als Durchmesser des Fließwegs zwischen dem Einlass und dem Auslass.

Der Fließweg und die Gewindeabschnitte weisen vorzugsweise eine konzentrische Achse auf. Die Achse des Fließwegs und die Längsachse des stiftförmig ausgebildeten, insbesondere zylindrisch ausgebildeten druckaufnehmenden Elements stehen besonders bevorzugt senkrecht aufeinander.

Das Druckmesselement kann einen integrierten Messanschluss für den gemessenen Druck aufweisen. Möglich ist es auch, dass er mit einem Manometer in direkter Verbindung steht.

Das vorgeschlagene Druckmesselement sieht also vor, dass das druckaufnehmende Element (d. h. das Druckübertragungselement) vom Medium, dessen Druck zu messen ist, umspült wird. Demgemäß ist es ausgeschlossen, dass sich in Toträumen bzw. Stauräumen Fluid ansammelt und über längere Zeit dort verbleibt. Der oben beschriebene Effekt, der die Funktionsfähigkeit des Druckmesselements beeinträchtigt, wird somit verhindert, d. h. es kann sich insbesondere kein aushärtendes Fett im Bereich des druckaufnehmenden Elements anlagern und sich dort festsetzen. Das mediumumspülte Druckübertragungselement ist also totraumfrei ausgebildet.

Die integrierte Bauweise des Druckmesselements ist vorteilhaft für den Einbau in einer Druckleitung geeignet.

Das Element ist für Fette mit mineralischer und synthetischer Ölbasis problemlos einsetzbar.

Das Element arbeitet in allen in Frage kommenden Druckbereichen zuverlässig, wobei Schaltdrücke zwischen 20 bar und 320 bar besonders relevant sind.

Auch bei tiefen Temperaturen ist die Funktion des Druckmesselements gewährleistet, bei denen die Gefahr besonders groß ist, dass sich verhärtetes Schmierfett das Element blockiert.

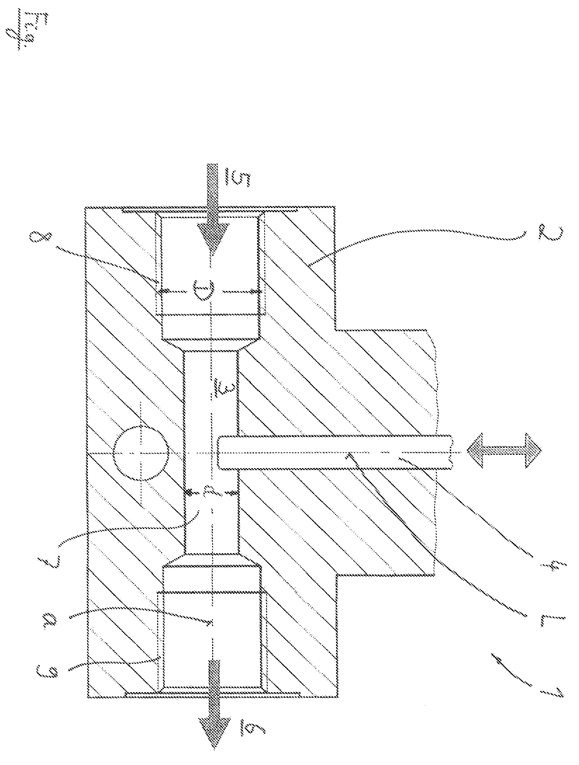

In der Zeichnung ist ein Ausführungsbeispiel der Erfindung dargestellt. Die einzige Figur zeigt den Schnitt durch ein erfindungsgemäßes Druckmesselement.

Das dargestellte Druckmesselement 1 wird überwiegend zur Überwachung und Abschaltung des Schmiervorgangs bei Schmieranlagen verwendet. Das Druckmesselement 1 hat zwei Anschlüsse für die Druckleitung, in die er eingebaut wird, nämlich einen Einlass 5 und einen Auslass 6. Die Installation des Druckmesselements 1 erfolgt in einer Druckleitung, die von dem Druckmedium (Fluid) durchströmt wird. Bevorzugt wird das Druckmesselement 1 vor dem letzten Verteiler (Zumessventil) angeordnet.

Das Druckmesselement 1 weist ein Gehäuse 2 auf, das aus einem einzigen Metallblock gefertigt sein kann. Im Gehäuse 2 ist eine Kavität 3 ausgebildet, die zum Eintritt bzw. Durchtritt des Fluids (d. h. insbesondere des Schmierfettes) ausgebildet ist, dessen Druck zu messen ist. Zur Druckmessung wird ein druckaufnehmendes Element 4 eingesetzt. Dieses Element, das als Druckübertragungselement fungiert, ist stößelförmig ausgebildet und ragt in die Kavität 3 hinein, in der sich das Fluid befindet.

Zwischen dem Einlass 5 und dem Auslass 6 bildet die Kavität 3 einen Fließweg 7 für das Fluid, dessen Druck zu messen ist. Der Anschluss von (nicht dargestellten) Rohrleitungen erfolgt über Gewindeabschnitte 8 und 9 des Einlasses 5 bzw. des Auslasses 6.

Zu erkennen ist, dass der Fließweg 7 zwischen dem Einlass 5 und dem Auslass 6 zylindrisch ausgebildet ist, wobei der Durchmesser des Fließwegs 7 mit d angegeben ist. Dem gegenüber sind die Durchmesser D der Gewindeabschnitte 8 und 9 des Einlasses 5 bzw. des Auslasses 6 deutlich größer.

Der Gewindeabschnitt 8 des Einlasses 5, der Fließweg 7 und der Gewindeabschnitt 9 des Auslasses 6 liegen auf einer konzentrischen Achse a. Das im Ausführungsbeispiel zylindrisch ausgebildete druckaufnehmende Element 4 weist eine Längsachse L auf, die senkrecht auf der Achse a steht. Statt einer senkrechten Anordnung der genannten Achsen hat sich auch eine solche bewährt, bei der der Winkel zwischen den Achsen zwischen 60° und 90° liegt.

Das druckaufnehmende Element 4 ist vorliegend stiftförmig ausgebildet, und zwar in Form eines zylindrischen Stifts. Unter stiftförmiger Ausbildung ist hier zu verstehen, dass die Länge des Elements 4 größer ist als der Durchmesser desselben.

Somit ist sichergestellt, dass ein Umströmen bzw. Umspülen des druckübertragenden Elements 4 erfolgt, bei dem sich kein Totraum ergibt und somit auch nicht die Gefahr besteht, dass sich Fett ablagert und verhärtet.

Das Druckmesselement 1 kann mit einem (nicht dargestellten) Messanschluss für ein Manometer bzw. direkt mit einem Manometer versehen bzw. verbunden sein.

Druck im Fließweg 7 wirkt auf das druckaufnehmende Element 4, also auf den Druckstößel, und verschiebt ihn in Richtung des Doppelpfeils. Die Auslenkung des Elements 4 gegen den Druck eines nicht dargestellten Federelements wird gemessen und liefert ein dem Druck im Fließweg 7 entsprechendes Signal, aus dem der Druck ermittelt werden kann.

### Bezugszeichenliste

- 1: Druckmesselement
- 2: Gehäuse
- 3: Kavität
- 4: druckaufnehmendes Element
- 5: Einlass
- 6: Auslass
- 7: Fließweg
- 8: Gewindeabschnitt
- 9: Gewindeabschnitt
- D: Durchmesser des Gewindeabschnitts
- d: Durchmesser des Fließwegs
- a: Achse
- L: Längsachse

## Patentansprüche

1. Druckmesselement (1), umfassend ein Gehäuse (2), das eine Kavität (3) zur Aufnahme eines Fluids aufweist, dessen Druck zu messen ist, wobei das Druckmesselement (1) weiterhin ein druckaufnehmendes Element (4) zur Messung des Drucks aufweist, das mit der Kavität (3) in fluidischer Verbindung steht, wobei sich die Kavität (3) von einem Einlass (5) bis zu einem Auslass (6) erstreckt und einen Fließweg (7) für das Fluid bildet, wobei das druckaufnehmende Element (4) zwischen dem Einlass (5) und dem Auslass (6) im Fließweg (7) angeordnet ist,
**dadurch gekennzeichnet, dass**
das druckaufnehmende Element (4) eine zylindrische Form mit konstantem Durchmesser aufweist, wobei es in einer Bohrung im Gehäuse (2) angeordnet ist, die einen konstanten Bohrungsdurchmesser aufweist, wobei sich das druckaufnehmende Element (4) mit einem seiner Enden in den Fließweg (7) hinein erstreckt und mit seiner restlichen Erstreckung im Gehäuse (2) angeordnet ist, wobei das druckaufnehmende Element (4) gegen den Druck eines Federelements auslenkbar angeordnet ist und wobei aus besagter Auslenkung des druckaufnehmenden Elements (4) gegen den Druck des Federelements der Druck im Fließweg (7) bestimmt wird.

2. Druckmesselement nach Anspruch 1, **dadurch gekennzeichnet, dass** der Fließweg (7) zumindest abschnittsweise zylindrisch ausgebildet ist.

3. Druckmesselement nach Anspruch 2, **dadurch gekennzeichnet, dass** das druckaufnehmende Element (4) im Bereich des zylindrischen Abschnitts angeordnet ist.

4. Druckmesselement nach einem der Ansprüche 1 bis 3, **dadurch gekennzeichnet, dass** der Einlass (5) und der Auslass (6) jeweils einen Gewindeabschnitt (8, 9) aufweisen, wobei das Gewinde in das Gehäuse (2) geschnitten ist.

5. Druckmesselement nach Anspruch 4, **dadurch gekennzeichnet, dass** der Durchmesser (D) des Gewindeabschnitts (8, 9) größer ist als Durchmesser (d) des Fließwegs (7) zwischen dem Einlass (5) und dem Auslass (6).

6. Druckmesselement nach Anspruch 4 oder 5, **dadurch gekennzeichnet, dass** der Fließweg (7) und die Gewindeabschnitte (8, 9) eine konzentrische Achse (a) aufweisen.

7. Druckmesselement nach Anspruch 6, **dadurch gekennzeichnet, dass** die Achse (a) des Fließwegs (7) und die Längsachse (L) des stiftförmig ausgebildeten, insbesondere zylindrisch ausgebildeten druckaufnehmenden Elements (4) senkrecht aufeinander stehen.

8. Druckmesselement nach einem der Ansprüche 1 bis 7, **dadurch gekennzeichnet, dass** er einen integrierten Messanschluss für den gemessenen Druck aufweist oder dass er mit einem Manometer in direkter Verbindung steht.

## Claims

1. Pressure-measuring element (1), comprising a housing (2) which has a cavity (3) for receiving a fluid whose pressure is to be measured, wherein the pressure-measuring element (1) further has a pressure-transducing element (4) for measuring the pressure that is in fluidic connection with the cavity (3), wherein the cavity (3) extends from an inlet (5) to an outlet (6) and forms a flow path (7) for the fluid, wherein the pressure-transducing element (4) is arranged between the inlet (5) and the outlet (6) in the flow path (7),
**characterized in that**
the pressure-transducing element (4) has a cylindrical shape with a constant diameter, wherein it is arranged in a bore in the housing (2) which has a constant bore diameter, wherein the pressure-transducing element (4) extends by one of its ends into the flow path (7) and is arranged with the remainder of its extent in the housing (2), wherein the pressure-transducing element (4) is arranged so as to be deflectable against the pressure of a spring element and wherein the pressure in the flow path (7) is determined from the said deflection of the pressure-transducing element (4) against the pressure of the spring element.

2. Pressure-measuring element according to Claim 1, **characterized in that** the flow path (7) is cylindrical at least in certain portions.

3. Pressure-measuring element according to Claim 2, **characterized in that** the pressure-transducing element (4) is arranged in the region of the cylindrical portion.

4. Pressure-measuring element according to one of Claims 1 to 3, **characterized in that** the inlet (5) and the outlet (6) each have a threaded portion (8, 9), wherein the thread is cut into the housing (2).

5. Pressure-measuring element according to Claim 4, **characterized in that** the diameter (D) of the threaded portion (8, 9) is greater than the diameter (d) of the flow path (7) between the inlet (5) and the outlet (6).

6. Pressure-measuring element according to Claim 4 or 5, **characterized in that** the flow path (7) and the threaded portions (8, 9) have a concentric axis (a).

7. Pressure-measuring element according to Claim 6, **characterized in that** the axis (a) of the flow path (7) and the longitudinal axis (L) of the pin-shaped, in particular cylindrical, pressure-transducing element (4) are perpendicular to one another.

8. Pressure-measuring element according to one of Claims 1 to 7, **characterized in that** it has an integrated measuring connection for the measured pressure or **in that** it is in direct connection with a manometer.

## Revendications

1. Élément de mesure de pression (1), comprenant un carter (2) comportant une cavité (3) permettant de recevoir un fluide dont la pression doit être mesurée, l'élément de mesure de pression (1) comportant en outre un élément de réception de pression (4) permettant de mesurer la pression et relié sur le plan fluide à la cavité (3), la cavité (3) s'étendant d'une admission (5) à une sortie (6) et formant une voie d'écoulement (7) pour le fluide, l'élément de réception de pression (4) étant disposé dans la voie d'écoulement (7) entre l'admission (5) et la sortie (6), **caractérisé en ce que** l'élément de réception de pression (4) présente une forme cylindrique avec diamètre constant, ledit élément étant disposé dans un alésage prévu dans le carter (2) présentant un diamètre d'alésage constant, l'élément de réception de pression (4) s'étendant avec ses extrémités dans la voie d'écoulement (7) et étant disposé avec le prolongement restant dans le carter (2), l'élément de réception de pression (4) étant disposé de façon à pouvoir être dirigé contre la pression d'un élément à ressort et la pression pouvant être déterminée dans la voie d'écoulement (7) à partir de ladite orientation de l'élément (4) de réception de pression contre la pression de l'élément à ressort.

2. Élément de mesure de pression selon la revendication 1, **caractérisé en ce que** la voie d'écoulement (7) est réalisée au moins en partie de façon cylindrique.

3. Élément de mesure de pression selon la revendication 2, **caractérisé en ce que** l'élément de réception de pression (4) est disposé dans la région de la section cylindrique.

4. Élément de mesure de pression selon l'une quelconque des revendications 1 à 3, **caractérisé en ce que** l'admission (5) et la sortie (6) comportent respectivement une section de filet (8, 9), le filet étant coupé dans le carter (2).

5. Élément de mesure de pression selon la revendication 4, **caractérisé en ce que** le diamètre (D) de la section de filet (8, 9) est plus grand que le diamètre (d) de la voie d'écoulement (7) entre l'admission (5) et la sortie (6).

6. Élément de mesure de pression selon la revendication 4 ou 5, **caractérisé en ce que** la voie d'écoulement (7) et les sections de filet (8, 9) présente un axe (a) concentrique.

7. Élément de mesure de pression selon la revendication 6, **caractérisé en ce que** l'axe (a) de la voie d'écoulement (7) et l'axe longitudinal (L) de l'élément de réception de pression (4) réalisé en forme de tige, notamment de façon cylindrique, se situent l'un au-dessus de l'autre dans le plan vertical.

8. Élément de mesure de pression selon l'une quelconque des revendications 1 à 7, **caractérisé en ce qu'**il comporte une borne de mesure intégrée pour la pression mesurée ou qu'il est directement relié à un manomètre.
